# EUROPÄISCHE PATENTSCHRIFT

(11) **EP 4 031 736 B1**
(45) Veröffentlichungstag und Bekanntmachung des Hinweises auf die Patenterteilung: **15.11.2023**
(21) Anmeldenummer: 20765267.8
(22) Anmeldetag: 02.09.2020
(51) Int. Cl.: E05D 11/00

(54) **VORRICHTUNG UND VERFAHREN ZUR IDENTIFIKATION UND ZUSTANDSÜBERWACHUNG EINER ZU ÜBERWACHENDEN EINRICHTUNG MIT EINEM ÖFFENBAREN UND VERSCHLIESSBAREN FLÜGELELEMENT**
DEVICE AND METHOD FOR IDENTIFYING, AND MONITORING THE STATE OF, AN ARRANGEMENT TO BE MONITORED HAVING AN OPENABLE AND CLOSABLE WING ELEMENT
DISPOSITIF ET PROCÉDÉ D'IDENTIFICATION ET DE SURVEILLANCE DE L'ÉTAT D'UN AGENCEMENT DEVANT ÊTRE SURVEILLÉ AYANT UN ÉLÉMENT D'AILE POUVANT ÊTRE OUVERT ET FERMÉ

(30) Priorität: 18.09.2019 DE 102019125087
(43) Veröffentlichungstag der Anmeldung: 27.07.2022
(73) Patentinhaber: SCHÜCO International KG, 33609 Bielefeld (DE)
(72) Erfinder: STIER, Helge, 32051 Herford (DE); KÜHN, Andreas, 33100 Paderborn (DE); GUSTORFF, Daniel, 33699 Bielefeld (DE)
(74) Vertreter: Specht, Peter
(86) Internationale Anmeldenummer: PCT/EP2020/074454
(87) Internationale Veröffentlichungsnummer: WO 2021/052757

(56) Entgegenhaltungen:
- EP-A1- 3 294 974
- EP-A1- 3 306 023
- JAIME CAMPOS ET AL: "A web and mobile device architecture for mobile e-maintenance", THE INTERNATIONAL JOURNAL OF ADVANCED MANUFACTURING TECHNOLOGY, SPRINGER, BERLIN, DE, Bd. 45, Nr. 1-2, 18. Februar 2009 (2009-02-18), Seiten 71-80, XP019755821, ISSN: 1433-3015, DOI: 10.1007/S00170-009-1942-X

## Beschreibung

Die Erfindung betrifft eine Vorrichtung zur Identifikation und Zustandsüberwachung einer zu überwachenden Einrichtung mit einem öffenbaren und verschließbaren Flügelelement, nach dem Anspruch 1. Die Erfindung betrifft ferner ein korrespondierendes Verfahren.

Es ist bekannt, Einrichtungen über eine drahtgebundene Verbindung oder über eine drahtlose Datenverbindung insbesondere mit einem entfernt zur Sensoreirichtung aufgestellten Computersystem "fern" zu überwachen, wobei an dem Computersystem eine Auswertung der übermittelten Daten vorgenommen wird. So ist es beispielsweise bekannt, an Brücken Sensoren zur Zustandsüberwachung anzubringen und diese in ein IoT-System (Internet of Things) einzubetten, um ein "Structural Health Monitoring" durchzuführen. Unter Structural Health Monitoring (SHM) wird die kontinuierliche oder periodische und automatisierte Methode zur Bestimmung und Überwachung des Zustandes eines Überwachungsobjektes innerhalb der Zustandsüberwachung (gemäß DIN ISO 17359) verstanden. Dies erfolgt durch Messungen mit permanent installierten bzw. integrierten Aufnehmern und durch Analyse der Messdaten. So sollen Schädigungen, zum Beispiel Risse oder Verformungen, frühzeitig erkannt werden, um Gegenmaßnahmen einzuleiten.

Ein SHM-System zur Zustandsüberwachung im Wesentlichen statischer Bauteile besteht aus der Überwachungsvorrichtung mit Sensorik sowie ggf. Signalanpassungseinheiten und Datenspeichern sowie einer Datenübertragungsvorrichtung als auch aus einem Datenverarbeitungssystem und einem in der Regel automatisierten Diagnosesystem.

Es ist auch denkbar, direkt an der Überwachungsvorrichtung - nachfolgend auch kurz Vorrichtung genannt - eine erste Datenauswertung vorzunehmen. Dies wird aber aufgrund des damit einhergehenden Energieverbrauchs wenn möglich vermieden.

In der gattungsgemäßen EP 3 306 023 A1 wird diese an sich bekannte Idee aufgegriffen und es wird vorgeschlagen, eine Zustandsüberwachung dieser Art an Einrichtungen der gattungsgemäßen Art vorzunehmen. Das in der EP 3 306 023 A1 vorgesehene System ist aber auf einem eher theoretisch abstrakten Niveau gehalten und nicht vorteilhaft für einen Einsatz in der Praxis zur Anwendungsreife geführt worden.

Vor diesem Hintergrund ist es die Aufgabe der vorliegenden Erfindung, eine Vorrichtung zur Identifikation und Zustandsüberwachung von zu überwachenden Einrichtung mit einem öffenbaren und verschließbaren Flügelelementen zu schaffen, die gut gewartet werden kann und die eine sichere Überwachung ermöglicht. Es ist ferner die Aufgabe der Erfindung ein Verfahren zu schaffen, mit dem eine sichere Überwachung der Einrichtung ermöglicht ist. Zudem soll eine vorteilhafte Einrichtung geschaffen werden, an der die Vorrichtungen besonders vorteilhaft angeordnet sind.

Die Erfindung löst diese Aufgabe durch den Gegenstand des Anspruchs 1, die Einrichtung des Anspruchs 13 und das Verfahren des Anspruchs 17.

Geschaffen wird - nach Anspruch 1 - eine Vorrichtung zur Identifikation und Zustandsüberwachung einer zu überwachenden Einrichtung mit einem öffenbaren und verschließbaren Flügelelement, wobei die Vorrichtung ein Gehäuse aufweist, das eine Gehäusebasis aufweist, das an der Einrichtung mit einem öffenbaren und verschließbaren Flügelelement festlegbar ist oder einstückig mit dieser verbunden ist, und wenigstens ein an die Gehäusebasis ansetzbares und von der Gehäusebasis abnehmbares Gehäusezweitteil (bzw. wenigstens ein Zweitteil und weitere - also dritte und vierte usw. Gehäuseteile), wobei die Vorrichtung ferner mit einer mehrere Bestandteile umfassenden Identifikationskennzeichnung versehen ist, wobei die Gehäusebasis eine erste Identifikationskennzeichnung aufweist, welche eine Identifikationskennzeichnung der zu überwachenden Einrichtung mit einem öffenbaren und verschließbaren Flügelelement ist und wobei das Gehäusezweitteil wenigstens eine zweite Identifikationskennzeichnung - ggf. auch mehrere weitere Identifikationskennzeichnungen - aufweist, welche das Gehäusezweitteil bzw. die zu überwachende Vorrichtung selbst kennzeichnet.

Die Gehäusebasis weist somit die erste Identifikationskennzeichnung auf, welche als eine Identifikationskennzeichnung der zu überwachenden Einrichtung mit einem öffenbaren und verschließbaren Flügelelement ausgelegt ist. Diese kann gleich bei der Herstellung der zu überwachenden Einrichtung mit einem öffenbaren und verschließbaren Flügelelement an der zu überwachenden Einrichtung mit einem öffenbaren und verschließbaren Flügelelement angebracht werden. In einem Rechnersystem zum Empfangen, Speichern und Auswerten von Daten, die von der Vorrichtung zur Identifikation und Zustandsüberwachung einer zu überwachenden Einrichtung mit einem öffenbaren und verschließbaren Flügelelement übermittelt werden, kann zu der ersten Identifikationskennzeichnung eine Art digitaler Zwilling der Einrichtung erzeugt und gespeichert werden. Dieser digitale Zwilling kann verschieden weit spezifiziert werden. In einem einfachen Fall kann der digitale Zwilling beispielsweise eine Stückliste der zu überwachenden Einrichtung mit einem öffenbaren und verschließbaren Flügelelement enthalten. Er kann aber auch weitere Parameter und Daten über die zu überwachende Einrichtung mit einem öffenbaren und verschließbaren Flügelelement enthalten.

Die Einrichtung kann beispielsweise ein Fenster oder eine Tür eines Gebäudes sein. Die Einrichtung kann aber auch beispielsweise ein Fahrzeug mit einer verschieblichen Scheibe sein. In diesem Fall ist die Scheibe das Flügelelement und das Fahrzeugteil, dass die Scheibe aufnimmt, bildet den übrigen Teil der Einrichtung. Der Begriff des Flügelelementes steht allgemein für ein bewegliches Verschlusselement, dass dazu ausgelegt ist, relativ zu einem Widerlager der Einrichtung bewegt zu werden, um eine Öffnung, beispielsweise in einem Blendrahmen als Widerlager, zu verschließen und freizugeben.

Die zu überwachende Einrichtung mit einem öffenbaren und verschließbaren Flügelelement an einem Einsatzort aufgestellt oder in eine Umgebung wie ein Gebäude oder ein Fahrzeug eingebaut. Jetzt oder bereits vorher ist es vorteilhaft, dass auf die Gehäusebasis oder an die Gehäusebasis ein Gehäusezweitteil angebaut werden kann, das selbst eine zweite Identifikationskennzeichnung besitzt.

Dem Rechnersystem zum Empfangen, Speichern und Auswerten von Daten, die von der Vorrichtung zur Identifikation und Zustandsüberwachung einer zu überwachenden Einrichtung mit einem öffenbaren und verschließbaren Flügelelement übermittelt werden, müssen sodann die erste und die zweite Identifikationskennzeichnung mitgeteilt werden, damit das Rechnersystem diese beiden Identifikationskennzeichnungen miteinander verknüpfen kann bzw. so zuordnen kann, so es für die Zukunft von dem zweiten Gehäuseteil übertragene Daten der jeweiligen Einrichtung mit einem öffenbaren und verschließbaren Flügelelement zuordnen kann bzw. dem digitalen Zwilling der Einrichtung mit einem öffenbaren und verschließbaren Flügelelement zuordnen kann, welcher ebenfalls die jeweilige erste Identifikationskennzeichnung aufweisen kann. Dies kann automatisiert geschehen. So kann das zweite Gehäuseteil dazu ausgelegt sein, die erste Identifikationskennzeichnung auszulesen und mit seiner eigenen zweiten Identifikationskennzeichnung zusammen auf einen auszuwertenden Rechner zu übertragen.

Es kann auch vorgesehen sein, dass beim Anbau des Gehäusezweitteils, die beiden Identifikationskennzeichnungen von einem Monteur erfasst und an das Rechnersystem zum Empfangen, Speichern und Auswerten von Daten übermittelt werden und dort miteinander verknüpft werden. In Zukunft genügt es dann, wenn die Vorrichtung die zweite Identifikationskennzeichnung mit einer Datenfolge an Sensordaten überträgt, um die Vorrichtung eindeutig einer bestimmten zu überwachenden Einrichtung mit einem öffenbaren und verschließbaren Flügelelement zuordnen zu können.

Es kann aber auch beispielsweise vorteilhaft vorgesehen sein, dass beim Anbau des Gehäusezweitteils dessen zweite Identifikationskennzeichnung per Funk an einen zentralen Rechner (z.B. in der Cloud) übertragen wird, dass dieser dann eine Anfrage an einen Monteur sendet, zu welcher ersten Identifikationskennzeichnung diese zweite Identifikationskennzeichnung gehört und dass der Monteur dann die entsprechende Information an den zentralen Rechner zurücksendet, damit dieser die zweite Identifikationskennzeichnung mit der ersten Identifikationskennzeichnung verknüpfen kann. In Zukunft genügt es dann wiederum, wenn die Vorrichtung die zweite Identifikationskennzeichnung mit einer Datenfolge an Sensordaten überträgt, um die Vorrichtung eindeutig einer bestimmten zu überwachenden Einrichtung zuordnen zu können.

Es kann auch vorgesehen sein, dass direkt an einem Eingabegerät, von Hand die zweite Identifikationskennzeichnung einer ersten zugeordnet wird, z.B. an einer Eingabemaske eines Rechners, und dass dann diese Daten gespeichert und in Zukunft zur Überwachung genutzt werden.

Derart wird jeweils eine sichere Prozessführung sichergestellt, damit der (noch zu erläuternde Empfänger) Messages/Responses/Requests der jeweiligen Vorrichtung zuverlässig und eindeutig erkennen kann. Dennoch ist es möglich, durch Abnehmen des Gehäusezweitteiles, Teile der Elektronik zu warten oder zu wechseln, so je nach Auslegung beispielsweise eine optional vorsehbare Batterie oder einen Sensor oder eine Datenübertragungseinrichtung. Es bleibt die sichere Prozessführung gesichert und die Datenerfassung kann nach dem Ende der Wartungsarbeiten für die bereits existierende erste Identifikationskennzeichnung weitergeführt werden. Vorzugsweise kann nach einem vollständigen Auswechseln des zweiten Gehäuseteils gegen ein Ersatzgehäusezweitteil - das eine eigene, neue zweite Identifikationskennzeichnung aufweist, dessen neue zweite Identifikationskennzeichnung im Rechnersystem neu der ersten Identifikationskennzeichnung der Einrichtung mit einem öffenbaren und verschließbaren Flügelelement, die sich durch den Austausch des Gehäusezweitteils nicht geändert hat, verknüpft werden.

Das Gehäuse ist somit zumindest zweiteilig. Die Gehäusebasis mit der Identifikationskennzeichnung wird so genannt, da sie vorzugsweise unlösbar an der zu überwachenden Einrichtung mit einem öffenbaren und verschließbaren Flügelelement so festgelegt ist, dass sie nicht entfernbar ist, ohne die erste Identifikationskennzeichnung zu zerstören. Die Gehäusebasis kann auch einstückig mit einem Gehäuse oder einem sonstigen Bauelement der zu überwachenden Einrichtung mit einem öffenbaren und verschließbaren Flügelelement ausgestaltet sein. Dann wird das Gehäusezweitteil direkt an die zu überwachende Einrichtung mit einem öffenbaren und verschließbaren Flügelelement angesetzt, die dazu eine Art Montagesockel bzw. Ansatzkonturen geeigneter Art aufweisen kann.

Die Gehäusebasis muss aber nicht vollständig "unter" dem Gehäusezweitteil angeordnet sein sondern es kann auch teilweise neben diesem angeordnet sein. Es vorzugsweise nur ein einziges Gehäusezweitteil vorgesehen. Es können aber auch weitere Gehäuseelemente bzw. -teile vorgesehen sein, die keine Identifikationskennzeichnung aufweisen müssen (aber können), aber sonstige Funktionselemente wie z.B. eine Batterie. Das Gehäusezweitteil kann selbst auch in mehrere Gehäuseabschnitte unterteilt sein, die einzeln oder gemeinsam an der Gehäusebasis montierbar sind.

Es kann weiter bevorzugt vorgesehen sein, dass die Gehäusebasis an der Einrichtung mit einem öffenbaren und verschließbaren Flügelelement mit einer Verbindungseinrichtung so festlegbar ist, dass sie nicht zerstörungsfrei von der Einrichtung mit einem öffenbaren und verschließbaren Flügelelement entfernt werden kann ohne dass die erste Identifikationskennzeichnung unbrauchbar wird, beispielsweise zerstört wird oder gelöst wird, so dass die Gehäusebasis keine erste Identifikationskennzeichnung mehr aufweist. Derart wird sichergestellt, dass stets eine eineindeutige Zuordnung der Identifikationskennzeichnung zur Einrichtung mit einem öffenbaren und verschließbaren Flügelelement gegeben ist, die nicht veränderbar/manipulierbar ist.

Es kann sodann nach einer weiteren vorteilhaften Ausgestaltung vorgesehen sein, dass das Gehäusezweitteil lösbar an der Gehäusebasis oder der Einrichtung mit einem öffenbaren und verschließbaren Flügelelement festgelegt ist, wobei aber vorzugsweise beim Lösen des Gehäusezweitteils die zweite Identifikationskennzeichnung unbrauchbar wird, also beispielsweise zerstört wird oder vom Gehäusezweitteil losbricht, so dass das Gehäusezweitteil sie nicht mehr aufweist, so dass sie insofern nicht mehr nutzbar ist. Derart kann sichergestellt werden, das bei Wartungsarbeiten stets ein Austausch des zweiten Gehäuseteils erfolgt, um beispielsweise einen Austausch eines Energiespeichers sicherzustellen oder einen Austausch von Sensoren, die nach einer gewissen Einsatzzeit auszutauschen sind. Denn ansonsten würde die zweite Identifikationskennzeichnung bei einem zukünftigen Senden von Daten nicht von der Vorrichtung an das Rechnersystem übertragen.

Die Erfindung löst die gestellte Aufgabe auch durch eine Einrichtung mit wenigstens einem öffenbaren und verschließbaren Flügelelement und mit wenigstens einer Vorrichtung nach einem oder mehreren der vorstehenden Ansprüche.

Dabei kann vorteilhaft vorgesehen sein, dass die Einrichtung als ein Fenster oder als eine Tür ausgebildet ist und einen Blendrahmen und einen Flügelrahmen aufweist. Es kann dann nach einer besonders vorteilhaften Variante weiter vorgesehen sein, dass zwischen dem Blendrahmen und dem Flügelrahmen ein Falzraum ausgebildet ist und dass die Vorrichtung ganz oder im Wesentlichen vollständig in dem Falzraum untergebracht ist. Denn hier ist sie gut geschützt unterbringbar und stört dennoch nicht oder nicht nennenswert den optischen Eindruck der Einrichtung. Das Fenster oder die Tür können beispielsweise ein Fenster oder eine Tür eines Gebäudes sein. Untern den Begriff Fenster ist auch der Begriff der Klappe zu fassen.

Dabei ist es besonders bevorzugt, wenn das Gehäuse der Vorrichtung an dem Flügelrahmen montiert oder ausgebildet ist. So kann vorgesehen sein, dass das Gehäuse der Vorrichtung bzw. insbesondere deren Gehäusebasis unlösbar an einer Nut des Flügelrahmens oder des Blendrahmens montiert ist. Derart wird die Montage der Gehäusebasis an der zu überwachenden Einrichtung deutlich vereinfacht.

Es kann weiter vorteilhaft vorgesehen sein, dass ein Funktionselement wie ein Sensor und/oder eine Antenne der Vorrichtung in einen Spalt ragt oder durch den Spalt ragt, der den Falzraum mit einem der an das Fenster oder die Tür angrenzenden Räume - also zum Beispiel einem Gebäudeinnenraum oder der Umgebung des Gebäudes - verbindet. Denn hier sind Signale besonders gut sensierbar (z.B. Öffnungs- und Schließsignale, die der Flügel an einem Sensor verursacht) und/oder zu einem externen Empfänger sendbar. In dem Spalt kann ggf. auch eine Dichtung angeordnet sein oder sie kann in den Spalt hineinragen, wobei die Dichtung (z.B. eine Anschlagdichtung) dann jedenfalls teilweise neben dem Funktionselement liegen kann.

Nach einer weiteren vorteilhaften Variante kann vorgesehen sein, dass - bezogen auf eine Einbausituation in einer Wandöffnung eines Gebäudes - die Vorrichtung in dem Bereich des Falzraumes angeordnet ist, der oberhalb der Mitte des eingebauten Flügelrahmens und des eingebauten Blendrahmens liegt, also vorzugsweise zwischen einem oberen horizontalen Flügelrahmenabschnitt und einem oberen horizontalen Blendrahmenabschnitt oder zwischen einem oberen Teil der vertikalen Blend- und Flügelrahmenabschnitte. Denn hier ist die Vorrichtung gut zugänglich und dennoch kaum von außen sichtbar.

Vorteilhafte Weiterbildungen sind den übrigen Unteransprüchen zu entnehmen.

Die Erfindung schafft nach einem unabhängigen Anspruch sodann ein System zur Zustandsüberwachung nach Anspruch 17.

Dabei kann auch vorgesehen sein, dass das System ferner wenigstens eine weitere Vorrichtung zur Identifikation und Zustandsüberwachung einer zu überwachenden Einrichtung aufweist, die einen anderen Aufbau als nach einem der Ansprüche 1 bis 12 aufweist, insbesondere kein öffenbares Flügelelement aufweist.

Die Erfindung schafft schließlich auch das Verfahren nach Anspruch 18.

Nachfolgend wird die Erfindung anhand von Ausführungsbeispielen unter Bezug auf die Zeichnung näher beschreiben, wobei auch weiterer Vorteile und Optionen veranschaulicht werden. Die Erfindung ist nicht auf die dargestellten Ausführungsbeispiele beschränkt, sondern kann auch in anderer Weise als dargestellt sowie auch in dazu äquivalenter Weise umgesetzt werden. Es zeigen:
- Fig.1: eine Einrichtung, die als Fenster ausgelegt, die ein öffenbares und verschließbares Flügelelement aufweist, wobei an zwei möglichen Einbauorten gestrichelt eine Vorrichtung zur Identifikation und Zustandsüberwachung eingezeichnet ist/vorgesehen ist;
- Fig. 2: in a) eine perspektivische Ansicht der Vorrichtung zur Identifikation und Zustandsüberwachung sowie eine geschnittene Ansicht der zu überwachenden Einrichtung mit einem öffenbaren und verschließbaren Flügelelement sowie in b) eine perspektivische Ansicht eines geöffneten Gehäuses der Vorrichtung zur Identifikation und Zustandsüberwachung und in c) eine Seitenansicht des Gehäuses;
- Fig. 3: in a) einen Schnitt durch einen Rahmenbereich einer Einrichtung, die als Fenster ausgelegt, mit einer Vorrichtung zur Identifikation und Zustandsüberwachung; in b) und c) je eine Ausschnittsvergrößerung aus a), wobei zusätzliche Details eingezeichnet worden sind;
- Fig. 4: eine schematische Darstellung einer möglichen Einbettung einer Vorrichtung zur Identifikation und Zustandsüberwachung in ein übergeordnetes Datenverarbeitungssystem.

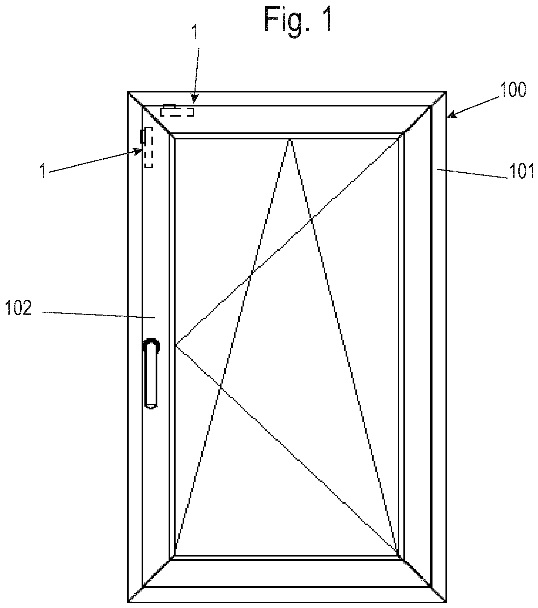

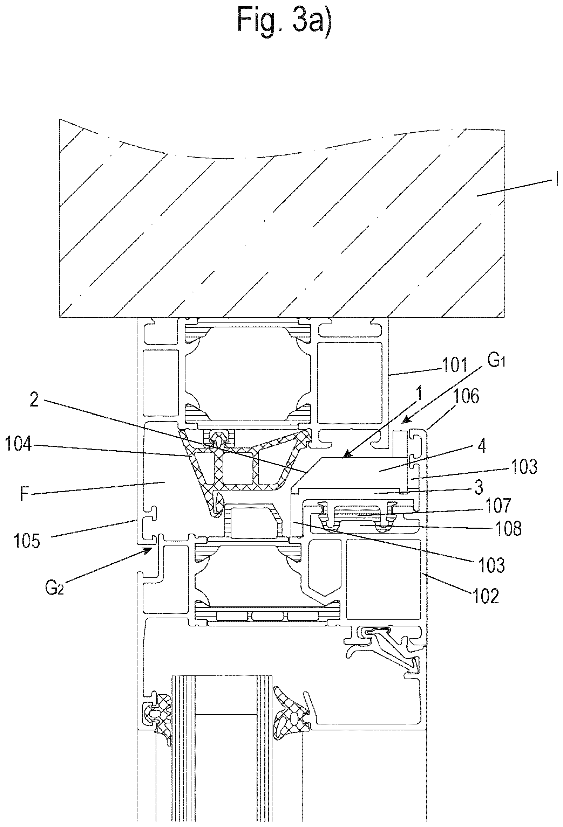

Fig.1 zeigt in a) und b) eine schematisch dargestellte zu überwachenden Einrichtung 100, hier mit einem Blendrahmen 101 und einem öffenbaren und verschließbaren Flügelelement 102. Die Einrichtung ist als ein Fenster eines Gebäudes I (siehe auch Fig. 3a) ausgebildet, das eine Wandöffnung aufweist, in welche der Blendrahmen 101 eingesetzt ist. Die Einrichtung kann aber alternativ auch als eine Tür oder eine Klappe eines Gebäudes ausgebildet sein.

Dabei können der Blendrahmen 101 und/oder der Flügelrahmen 102 auf verschiedenste Weise aufgebaut sein. Sie können beispielsweise nach einer Variante als Verbundrahmen aus einem oder mehreren Metallprofilen gefertigt sein. Sie können alternativ aber auch im Wesentlichen aus einem einzigen Material wie beispielsweise Kunststoff oder Holz bestehen.

Vorzugsweise ist zwischen dem Blendrahmen 101 und dem Flügelrahmen 102 ein umlaufender Falzraum F ausgebildet.

An der Einrichtung 100 mit einem öffenbaren und verschließbaren Flügelelement 102 ist eine Vorrichtung 1 zur Identifikation und Zustandsüberwachung festgelegt, die ein Gehäuse 2 aufweist.

Das Gehäuse 2 ist vorzugsweise an dem Blendrahmen 101 angeordnet. Es ist weiter vorteilhaft, wenn das Gehäuse 2 ganz oder im Wesentlichen in dem umlaufenden Falzraum F zwischen dem Blendrahmen 101 und dem Flügelrahmen 102 angeordnet ist. Daran ist besonders vorteilhaft, dass die Vorrichtung dort gut unterbringbar und montierbar ist und zudem gut geschützt liegt (jedenfalls, wenn der Flügel geschlossen ist). Denn das Gehäuse 1 kann vorteilhaft so - beispielsweise länglich und relativ flach - gestaltet werden, dass es gut von dem Falzraum F aufgenommen werden kann. Es kann optional weiter vorteilhaft vorgesehen sein, dass das Gehäuse 2 seitlich zu einer Mitteldichtung 104 liegt (siehe Fig. 3a)

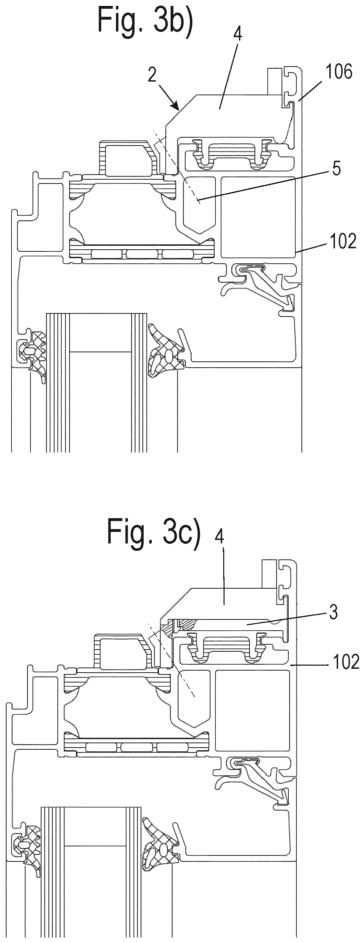

Dabei kann das Gehäuse 1 wahlweise an dem Flügelrahmen 102 oder an dem Blendrahmen 101 untergebracht werden. Nach Fig. 3 wurde eine Unterbringung an dem Flügelrahmen 102 gewählt. Vorteilhaft ist jeweils, dass in der Regel in dem Falzraum F an dem Blendrahmen 101 oder an dem Flügelrahmen 102 Befestigungskonturen wie Nuten 103 (siehe beispielhaft die zwei Nuten in Fig. 3) und/oder Anlageelemente wie ein Steg 105 oder dgl. (sowieso) vorhanden sind - die ansonsten beispielsweise für Beschläge oder dgl. genutzt werden, an denen das Gehäuse 1 montiert werden kann. Dies ist besonders einfach und sicher.

Es kann schließlich auch vorgesehen sein, dass das Gehäuse 2 so oberhalb einer Beschlagnut 103 montiert ist und nicht oder nicht nennenswert in diese eingreift, so dass unterhalb des Gehäuses in der Beschlagnut 107 noch ein Funktionselement 108 - beispielsweise eine Riegelstange - montierbar ist bzw. montiert ist und funktionsfähig bleibt.

Es ist weiter vorteilhaft, wenn - bezogen auf eine Einbausituation in einer Wandöffnung eines Gebäudes - die Vorrichtung in dem Bereich des Falzraumes F angeordnet ist, der oberhalb der Mitte des eingebauten Flügelrahmens 102 und des eingebauten Blendrahmens 101 liegt, also vorzugsweise zwischen einem oberen horizontalen Flügelrahmenabschnitt und einem oberen horizontalen Blendrahmenabschnitt oder zwischen einem oberen Teil der vertikalen Blend- und Flügelrahmenabschnitte. Hier ist die Vorrichtung wiederum kaum sichtbar und dennoch gut geschützt auf einfache Weise gut unterbringbar. Zudem sind in diesen Bereichen Wartungs- und Installationsarbeiten in der Regel besonders gut durchführbar.

Der Falzraum F zwischen dem Blendrahmen 101 und dem Flügelrahmen 102 weist zwei Spalten S1; S2 auf, die ihn mit den beiden an die Einrichtung - die Tür oder das Fenster - angrenzenden Räume verbinden.

In der Regel überlappt im Bereich dieser Spalte G1, G2 jeweils ein Steg 105 bzw. 106 das jeweils andere Element - also den Flügelrahmen 102 oder den Blendrahmen 101.

Es ist vorteilhaft, wenn ein Funktionselement der Vorrichtung 1 - beispielweise eine Sensoreinrichtung/und/oder eine Antenne - angedeutet durch das Bezugszeichen 13 - in denjenigen Spalt G1 hineinragt, der zum Gebäudeäußeren bzw. zur Umgebung hin liegt. Denn derart ist es besonders einfach, Daten und andere Informationen an einen Empfänger E zu übertragen (dazu später mehr).

Vor diesem Hintergrund sei nunmehr näher der Aufbau des Gehäuses 2 beschrieben.

Das Gehäuse 2 weist eine Gehäusebasis 3 auf, die an der Einrichtung mit einem öffenbaren und verschließbaren Flügelelement 102 festgelegt ist und zumindest ein von der Gehäusebasis 3 abnehmbares Gehäusezweitteil 4.

Dabei ist vorgesehen, dass die Gehäusebasis 3 mit einer ersten Identifikationskennzeichnung versehen ist. Das Gehäusezweitteil 4 ist ferner mit wenigstens einer zweiten Identifikationskennzeichnung versehen. Diese sind jeweils eineindeutig vergeben und bevorzugt nicht zerstörungsfrei von der Gehäusebasis 4 bzw. dem Gehäusezweitteil entfernbar.

Besonders vorteilhaft ist sodann, dass die Gehäusebasis 3 der Vorrichtung 1 zur Identifikation und Zustandsüberwachung an der Einrichtung mit einem öffenbaren und verschließbaren Flügelelement 102 mit einer Einrichtung 100 mit einem öffenbaren und verschließbaren Flügelelement, insbesondere einem Befestigungsmittel 5, so festgelegt ist, dass sie nicht zerstörungsfrei von dieser Einrichtung mit einem öffenbaren und verschließbaren Flügelelement 102 entfernt werden kann, ohne die erste Identifikationskennzeichnung zu beschädigen.

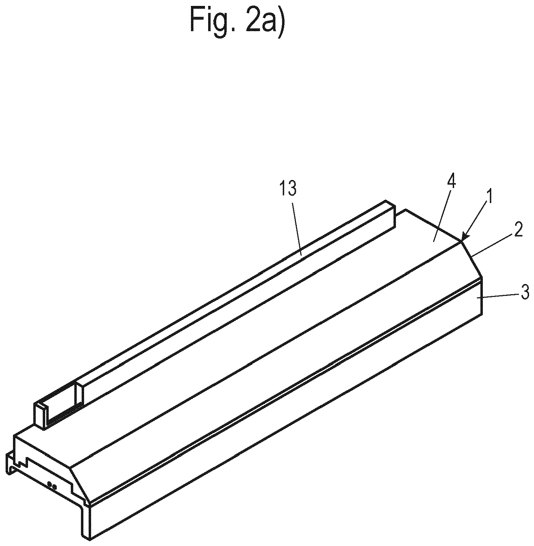

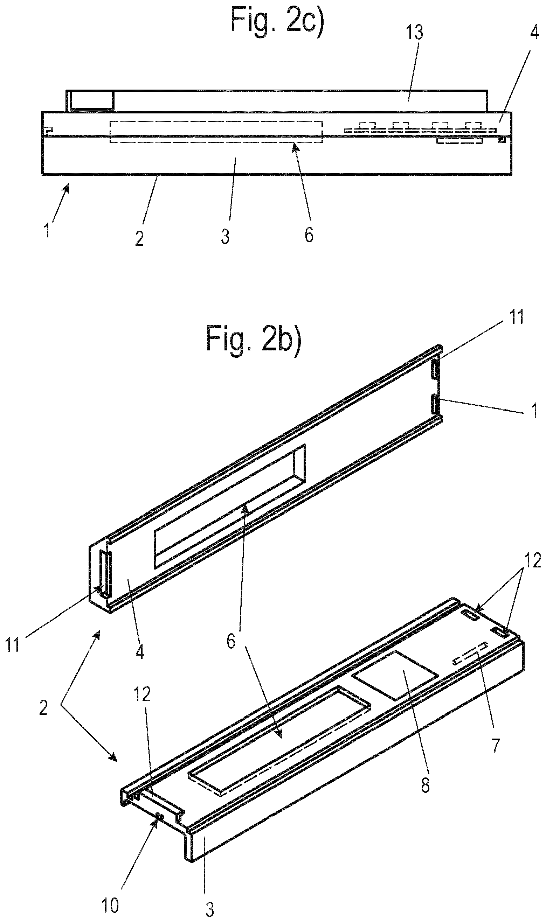

Derart wird eine sichere Prozessführung sichergestellt, damit der (noch zu erläuternde Empfänger) Messages/Responses/Requests der jeweiligen Vorrichtung 1 zuverlässig und eindeutig erkennen kann. Um die Gehäusebasis 3 fest mit der Einrichtung mit einem öffenbaren und verschließbaren Flügelelement zu verbinden, können verschiedenste Verbindungsmittel bzw. Befestigungsmittel 5 verwendet werden. Die Art der Befestigung hängt dabei von der Art der Beschaffenheit der Einrichtung mit einem öffenbaren und verschließbaren Flügelelement 102 ab. Beispielhaft zu erwähnen als Verbindungsmittel sind Abdrehschrauben, Einmalnieten oder Mikroschneidklingen (die sich ins Profil verhaken) oder auch Klebeverbindungen verschiedenster Art. Angedeutet ist dies in Fig. 2b und 2c, wo gestrichelte Linien durch die Gehäusebasis 3 und den Flügelrahmen 102 verlaufen, was für entsprechende Befestigungsmittel der genannten Art steht. Vorzugsweise ist zuvor eine Vorverrastung des Gehäuses 2 bzw. der Gehäusebasis 3 an dem Fenster bzw. hier an dem Flügelrahmen 102 möglich, indem an der Gehäusebasis 3 Rastmittel vorgesehen sind, die mit korrespondierenden Rastmitteln an dem Fenster, insbesondere an dem Flügelrahmen 102, zusammenwirken. Die korrespondierenden Rastmittel können Hinterschnitte einer Nut sein und die Rastmittel am Gehäuse 2 Raststege oder dgl.

Die Identifikationskennzeichnung IK weist die erste Identifikationskennzeichnung der zu überwachenden Einrichtung mit einem öffenbaren und verschließbaren Flügelelement auf und eine zweite Identifikationskennzeichnung, welche das Gehäusezweitteil und damit die Vorrichtung 1 zur Identifikation und Zustandsüberwachung selbst kennzeichnet. Die erste Identifikationskennzeichnung kann beispielsweise als Speicherort der Kennzeichnung ein NFC bzw. RFID-Tag 7 aufweisen sowie optional einen QR-Code 8 zur Identifikation der Einrichtung mit einem öffenbaren und verschließbaren Flügelelement. Und die zweite Identifikationskennzeichnung kann im Wesentlichen in beliebiger Art ausgestaltet sein, so auch in einem RFID-Tag 7 eingespeichert sein oder in einem anderen nicht flüchtigen Speicher der Elektronik der Vorrichtung.

Das Gehäusezweitteil 4 ist vorzugsweise lösbar an der Gehäusebasis 3 festgelegt. Es kann somit von der Gehäusebasis 3 gelöst werden, insbesondere um Wartungsarbeiten oder Reparaturen auszuführen. Es kann auch vorgesehen sein, dass das Gehäusezweitteil zwingend gewechselt werden muss. Dann ist es vorteilhaft, wenn es nicht von der Gehäusebasis lösbar ist, ohne seine zweite Identifikationskennzeichnung zu zerstören (unbrauchbar zu machen).

Es kann weiter vorgesehen sein, dass das Gehäusezweitteil 4 solche Einrichtungen aufweist, die gelegentlich zu wechseln und/oder zu warten sind, so beispielsweise eine Batterie zur Energieversorgung der Vorrichtung 1. Dazu kann ferner vorgesehen sein, dass die Gehäusebasis 3 und das Gehäusezweitteil 4 zusammen einen Aufnahmeraum - beispielsweise ein Batteriefach 6 - zur Aufnahme der Batterie oder dgl. ausbilden um die Vorrichtung 1 selbst mit elektrischer Energie zu versorgen.

Eine Energieversorgung kann auch auf andere Weise erfolgen oder ergänzend auf andere Weise, so über eine Einrichtung zum Energy-Harvesting oder über ein Stromversorgungskabel, dass mit einem externen Energiespeicher oder einem Energienetz verbunden ist. Im letzteren Fall ist es vorteilhaft, wenn am Gehäuse eine Schnittstelle, beispielsweise ein Steckanschluss 10, für einen Anschluss eines Kabels/Steckers, beispielsweise eines Magnetsteckers vorgesehen sein. Derart wird eine optionale Möglichkeit zur Spannungsversorgung durch einen integrierten Leitungsübergang geschaffen.

Eine Elektronikschaltung kann wahlweise am Gehäusezweitteil 4 oder an der Gehäusebasis 3 angeordnet werden, vorzugsweise wird sie am Gehäusezweitteil ausgebildet.

Die Elektronikschaltung umfasst vorzugsweise eine Datenübertragungseinrichtung. Diese weist vorzugsweise zumindest folgendes auf: ein Sende- und/oder Empfangsmodul, eine Antenne und eine Sensorik sowie einen Mikroprozessor. Diese Elektronikschaltung umfasst vorzugsweise zudem eine Antenne. Die Datenübertragungseinrichtung ist zumindest zum Senden aber vorzugsweise auch zum Empfangen von Daten ausgebildet.

Die Datenübertragung erfolgt vorzugsweise drahtlos. Dabei sind verschiedenste Datenübertragungsverfahren einsetzbar, so WLAN, Wi-Fi, Bluetooth, RFID, LoRa, LPWAN, LoRAWAn, LPN, Niederfrequenz, Funk. Diese Aufzählung umfasst einige besonders vorteilhafte Datenübertragungsverfahren, ist aber nicht als abschließend zu betrachten.

Die Elektronikschaltung umfasst vorzugsweise ferner eine Sensorik mit wenigstens einem Sensor. Sie kann ferner eine Steuereinrichtung aufweisen.

Die Sensorik dient mit einem oder mehreren Sensoren nach Art von Aufnehmern zum Erfassen von Eigenschaften, insbesondere physikalischen oder chemischen Eigenschaften (physikalisch z. B. Wärmemenge, Temperatur, Feuchtigkeit, Druck, Schallfeldgrößen, Helligkeit, Beschleunigung oder chemisch) der Einrichtung mit einem öffenbaren und verschließbaren Flügelelement 102 oder an der Einrichtung mit einem öffenbaren und verschließbaren Flügelelement 102, um die Parameter an der zu überwachenden Einrichtung mit einem öffenbaren und verschließbaren Flügelelement 102 qualitativ oder als Messgröße quantitativ zu erfassen. Diese Größen werden mittels physikalischer oder chemischer Effekte erfasst und in weiterverarbeitbare elektrisches Signale umgewandelt. Diese Signale können dann direkt oder nach einem Sammeln von Messwerten nach einer gewissen Zeit mit der Datenübertragungseinrichtung an einen Empfänger E gesendet werden.

Optional oder alternativ können mit der Sensorik aber auch andere Parameter, insbesondere Umweltparameter wie z.B. Lärmbelastung, Schadstoffbelastungen der Luft, Feinstaub, Luftdruck, Helligkeit usw. ermittelt werden.

Die ermittelten Werte werden in der Sensorik vorverarbeitet und zwischengespeichert um eine möglichst geringe Datenmenge übertragen zu können.

Sofern die Vorrichtung auch eine Steuereinrichtung aufweist, kann diese auch zum Ansteuern von Aktoren und dgl. genutzt werden, mit denen die Vorrichtung 1 dann zu verbinden ist (drahtlos oder auch auf andere Weise).

Das Gehäusezweitteil 4 wird mit der Gehäusebasis 3 lösbar verbunden, beispielsweise starr verrastet. Hierzu sind korrespondierende Verbindungsmittel, insbesondere lösbare korrespondierende Rastmittel 11, 12 an der Gehäusebasis 3 und dem Gehäusezweitteil 4 vorgesehen. Diese lösbare Verbindung kann auch durch andere Mittel realisiert werden, so beispielsweise durch Schrauben und Muttern oder dgl.

Mit Hilfe der Sensorik sind verschiedenste Erfassungen von Größen möglich. So können Bewegungen des öffenbaren und verschließbaren Flügelelements 102 ermittelt werden. Es ist aber auch denkbar, Umweltparameter (wie beispielsweise Temperatur oder Feuchtigkeit) direkt an der Einrichtung zu ermitteln.

Das wenigstens eine Gehäusezweitteil 4 enthält zur Energieversorgung der Elektronik vorzugsweise die bereits erwähnte Batterie, die einen wartungsfreien Betrieb für mehrere Jahre ermöglichen sollte. Dabei kann vorzugsweise vorgesehen sein, die Batterie zu wechseln, ohne dass die Sensorik gewechselt werden muss. Dazu kann letztere in der Gehäusebasis 3 untergebracht sein.

Es kann aber auch vorgesehen sein, dass das gesamte Gehäusezweitteil 4 mit der Sensorik unabhängig von der Gehäusebasis 3 ausgewechselt werden kann oder muss.

Anschließend müssen die Elektronik im Gehäusezweitteil (insbesondere die Sensoreinheit und die Elektronik in der Gehäusebasis 3 (so die erste Identifikationskennzeichnung (aus dem Unterteil 3) und die zweite Identifikationskennzeichnung erneut miteinander gekoppelt werden. Dies kann in dem Rechnersystem erfolgen.

Dies bietet mehrere Vorteile. So führt ein Wechsel der Sensorik/Sensoreinheit nicht zu einem Verlust der gesammelten Daten der Einrichtung mit einem öffenbaren und verschließbaren Flügelelement, da die identifizierenden Bauteile in der Gehäusebasis fest mit der zu überwachenden Einrichtung mit einem öffenbaren und verschließbaren Flügelelement verbunden sind.

Abhängig vom Datenübertragungsmodul, das vorzugsweise auch ein Funkmodul aufweisen kann und abhängig von der zur Verfügung stehenden Energie kann die Datenübertragung auch über WLAN, WIFI, Bluetooth, NFC oder LPWAN (Sigfox, NB-IoT, Mioty, LoRaWAN) erfolgen.

Die Datenübertragungsmodule/Funkmodule und die Mikroprozessoreinheit der einzelnen Vorrichtungen 1 können für eine Kommunikation verschiedenster Art ausgelegt sind.

So kann vorgesehen sein, dass sie jeweils Sensorwerte und übertragene Informationen zunächst sammeln und dann nur in bestimmten Zeitabständen zu einem Empfänger verschicken.

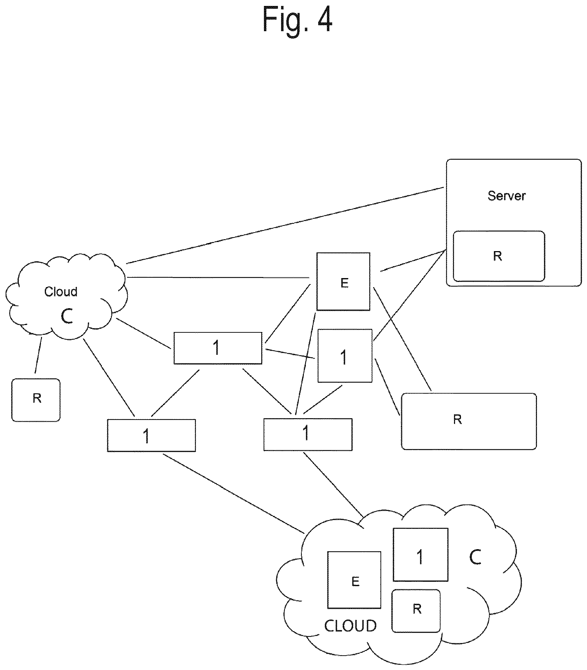

Dabei kann der Empfänger auch eine andere Vorrichtung 1 gleicher Art sein, welche zunächst in einem beispielsweise nahen Umfeld die Daten der verschiedenen Vorrichtungen 1 sammelt und diese dann gemeinsam in vorgegebenen Zeitabständen an einen Rechner oder eine IoT-System oder dgl. überträgt, wobei diese jeweils einen Empfänger aufweisen müssen oder mit einem solchen verbunden sein müssen. Dargestellt sind solche Varianten in Fig. 4.

Es kann auch vorgesehen sein, dass abhängig von der Dringlichkeit eines Sensorwertes am Sensormodul entschieden werden kann, wann eine Message gesendet wird. So wird z.B. ein erkannter Einbruchsversuch direkt versandt, Werte wie Öffnungszyklen oder Raum luftparameter werden in Pakete verpackt und z.B. einmal täglich oder mit der nächsten Übertragung mit hoher Dringlichkeit gemeinsam Versand.

Die Datenübertragungsvorrichtung bzw. das Funkmodul der jeweiligen Vorrichtung 1 1q ist zumindest als Sendevorrichtung zum Senden von Daten ausgebildet, sie kann aber auch als kombinierte Sende- und Empfangseinrichtung zum Senden und zum Empfangen von Daten ausgebildet sein. Nachfolgend umfasst der Begriff der Datenübertragungsvorrichtung beide dieser Optionen.

Ein System zur Überwachung einer oder mehrerer zu überwachender Einrichtung mit einem öffenbaren und verschließbaren Flügelelementen weist eine oder mehrere, insbesondere eine Vielzahl, der zu überwachenden Einrichtungen mit öffenbaren und verschließbaren Flügelelementen 100 auf. Daneben können solche Einrichtungen auch an weiteren Elementen ohne öffenbare und verschließbare Flügelelemente angeordnet sein, so beispielweise an Festverglasungen, die insofern auch zu dem System gehören können.

Dabei wird vorzugsweise jeder der zu überwachenden Einrichtung mit einem öffenbaren und verschließbaren Flügelelementen 100 jeweils eine der Vorrichtungen 1 zur Identifikation und Zustandsüberwachung zugeordnet.

Diese können, müssen aber nicht alle gleich aufgebaut ein.

An einem Empfänger E werden die Daten der Vorrichtungen 1 empfangen und ausgewertet und/oder gespeichert, so beispielsweise in einer oder mehreren Datenbanken, insbesondere in einer Datencloud C.

In einem Auswertungsprogramm eines Computers bzw. Rechners R, insbesondere eines Servers, können die Daten mit vorgespeicherten Parametern verglichen werden, insbesondere wird zu jeder zu überwachenden Einrichtung mit einem öffenbaren und verschließbaren Flügelelement in dem Datenverarbeitungssystem ein digitaler Zwilling erzeugt, und die übertragenden Daten werden diesem digitalen Zwilling zugeordnet.

Die Auswertung kann ein Überwachen verschiedenster Art umfassen. So kann ein Vergleich der übertragenden Daten mit vorgespeicherten Sollwerten erfolgen, um im Falle einer Abweichung von einem Sollwert ein Signal auszugeben, um anzuzeigen, dass beispielsweise eine Wartung erfolgen sollte oder um einen Sonderfall oder Notfall anzuzeigen (beispielsweise einen Glasbruch oder einen nicht reagierenden Aktor oder dgl.).

In Fig. 3 ist rein schematisch eine Empfangsvorrichtung E dargestellt. Diese ist beabstandet zu den zu überwachenden Einrichtungen 100, z.B. beabstandet von einem mit der Einrichtung mit einem öffenbaren und verschließbaren Flügelelement versehenen Gebäude z.B. zentral in einer Ortschaft.

Die Empfangsvorrichtung E kann über eine weitere drahtlose oder drahtgebundene Datenverbindungsstrecke - beispielsweise eine Internetverbindungsstrecke - mit einer Rechnerinfrastruktur und über diese oder direkt mit einer Datenbank - (Server R, Cloud)- zum Auswerten und/oder Speichern von Daten verbunden sein oder direkt einen Teil des Servers oder dgl. bilden.

In Fig. 4 werden Verbindungsstrecken durch Pfeile angedeutet. Diese sind ausgehend von den Vorrichtungen 1 vorzugweise drahtlos. Die Verbindungen zwischen den Empfängern E und den Rechnern können drahtlos oder drahtgebunden (darunter sind auch lichtleitende Verbindungen zu fassen) ausgestaltet sein.

Diese Rechnerinfrastruktur mit einer Datenbank kann an sich in weitgehend beliebiger Weise ausgestaltet sein, so dass direkt an der Empfangsvorrichtung ausgebildeter Rechner mit Datenspeicher oder auch als eine Infrastruktur, die über das Internet verfügbar ist, und beispielsweise Speicherplatz, Rechenleistung und Anwendungssoftware nach Art einer Cloud-Computing-Lösung beinhaltet. Dabei kann auch direkt an der Empfangsvorrichtung ein Server der Rechnerinfrastruktur ausgebildet sein.

Die Empfangsvorrichtung E ist zumindest zum Empfangen von und optional auch zum Senden von Daten an die Vorrichtung 1 über die drahtlos ausgestaltete Datenverbindungsstrecke V1 ausgelegt. Sie kann zudem die Daten an die Rechnerinfrastruktur mit der Datenbank - 300 -speichern.

Das Senden und Empfangend der Daten erfolgt vorzugsweise in einem Low Power Wide Area Network (LPWAN oder LPN, deutsch: Niedrigenergieweitverkehrnetzwerk). Dieses umfasst nach dem Onlinelexikon WIKIPEDIA eine Klasse von Netzwerkprotokollen (und Geräten) zur Verbindung von Niedrigenergiegeräten wie batteriebetriebene Sensoren mit einem Netzwerkserver. Das Protokoll ist so ausgelegt, dass eine große Reichweite und ein niedriger Energieverbrauch der Endgeräte bei niedrigen Betriebskosten erreicht werden können. Dies ist vorteilhaft, aber nicht zwingend. Die Datenübertragung kann auch nach einem anderen Standard erfolgen, so kann die Datenübertragung abhängig von der Technik der Sendeeinheit und der Empfangseinheit und der zur Verfügung stehenden Energie auch über WLAN, WIFI, Bluetooth, NFC erfolgend. Im LPWAN erfolgt sie beispielsweise über eines der Protokolle Sigfox, NB-IoT, Mioty oder LoRaWAN.

Insgesamt wird es derart möglich, auf einfache und sichere Weise eine Verknüpfung eines digitalen Zwillings insbesondere in der Cloud mit digitalen Stücklisten, Status und weiteren Inhalten durch Verwendung einer eineindeutigen Identifikationsnummer zu erreichen.

Dabei kann eine Auswertung von mechanischen Informationen, z.B. von Kräften, Beschleunigungen etc. erfolgen, um Rückschlüsse auf den Zustand der Einrichtung mit einem öffenbaren und verschließbaren Flügelelement ziehen zu können.

Denkbar sind auch eine Auswertung von Betätigungszyklen und/oder eine Auswertung von Sensordaten, z.B. Lufttemperatur und Luftfeuchte, um Rückschlüsse auf die Umwelt des Sensors ziehen zu können.

Diese Daten können abhängig von den Rechten des Users in einer Applikation beurteilt, ergänzt oder verarbeitet werden.

Die Daten können auch zunächst in der Vorrichtung 1 lokal gesammelt und nur von Zeit zu Zeit an den Server übermittelt werden, um eine mehrjährige Betriebszeit des Sensors aus einer Batterie zu ermöglichen.

Beim Bau der Einrichtung 100 - insbesondere mit einem öffenbaren und verschließbaren Flügelelement 102 - wird vorzugsweise zur Erzeugung des digitalen Zwillings eine Stückliste der Einrichtung 100 mit der Identifikationsnummer IK des Elementes im Server verbunden.

Beim Einbau der Einrichtung 100 - insbesondere mit einem öffenbaren und verschließbaren Flügelelement 102 - werden ferner vorzugsweise eine Position der Einrichtung mit einem öffenbaren und verschließbaren Flügelelement und eine Bestätigung der korrekten Funktion mit der Identifikationsnummer der Einrichtung mit einem öffenbaren und verschließbaren Flügelelement im Server verbunden.

Im Betrieb der Einrichtung mit einem öffenbaren und verschließbaren Flügelelement werden sodann vorzugsweise Betriebsdaten der Einrichtung mit einem öffenbaren und verschließbaren Flügelelement an den Server übertragen und mit der Identifikationsnummer der Einrichtung mit einem öffenbaren und verschließbaren Flügelelement verbunden.

Auf dem Server können die Daten der Einrichtung mit einem öffenbaren und verschließbaren Flügelelement weiter analysiert werden.

In entsprechenden Applikationen, mit denen sich ein Nutzer auf diesen Server verbindet, kann/können eine oder mehrere folgender Funktionalitäten umgesetzt und genutzt werden. Es können:
- die Daten eingesehen werden,
- ein möglicher Verschleiß und Fehlerzustände erkannt werden,
- Verschlusszustände überwacht werden,
- eine Lüftungsempfehlung ausgegeben werden,
- ein Alarm ausgelöst werden,
- Vandalismus erkannt werden,
- ein Einbruch erkannt werden,
- eine Aktion an einem Aktor ausgelöst werden,
- eine Wartung empfohlen bzw. geplant werden,
- Ersatzteile bestellt werden, und/ oder
- eine Meldung an einen Servicepartner gesendet werden, die alle für diesen relevante Daten zum Element enthält.

**Bezugszeichen**

| | |
|---|---|
| Vorrichtung | 1 |
| Gehäuse | 2 |
| Gehäusebasis | 3 |
| Gehäusezweitteil | 4 |
| Befestigungsmittel | 5 |
| Aufnahmeraum | 6 |
| RFID-Tag | 7 |
| QR-Code | 8 |
| Steckanschluss | 10 |
| Rastmittel | 11, 12 |
| Antenne | 13 |
| Einrichtung | 100 |
| Blendrahmen | 101 |
| Flügelrahmen | 102 |
| Nut | 103 |
| Mitteldichtung | 104 |
| Steg | 105, 106 |
| Beschlagnut | 107 |
| Funktionselement | 108 |
| Gebäude | I |
| Falzraum | F |
| Empfänger | E |
| Rechner | R |
| Cloud | C |
| Spalt | G1, G2 |

## Patentansprüche

1. Vorrichtung (1), zur Identifikation und Zustandsüberwachung einer zu überwachenden Einrichtung (100) mit einem öffenbaren und verschließbaren Flügelelement (102), wobei die Vorrichtung (1) ein Gehäuse (2) aufweist, das eine Gehäusebasis (3) aufweist, das an der Einrichtung (100) festlegbar ist oder einstückig mit dieser verbunden ist, und wenigstens ein an die Gehäusebasis ansetzbares und von der Gehäusebasis abnehmbares Gehäusezweitteil (4), wobei die Vorrichtung ferner mit einer Identifikationskennzeichnung versehen ist, wobei die Gehäusebasis (3) eine erste Identifikationskennzeichnung aufweist, welche eine Identifikationskennzeichnung der zu überwachenden Einrichtung mit einem öffenbaren und verschließbaren Flügelelement ist, wobei das Gehäusezweitteil wenigstens eine zweite Identifikationskennzeichnung aufweist, welche das Gehäusezweitteil kennzeichnet.

2. Vorrichtung zur Identifikation und Zustandsüberwachung einer zu überwachenden Einrichtung mit einem öffenbaren und verschließbaren Flügelelement (100) nach Anspruch 1, **dadurch gekennzeichnet, dass** die Gehäusebasis (3) an der Einrichtung mit einem öffenbaren und verschließbaren Flügelelement (100) mit einer Verbindungseinrichtung mit einem öffenbaren und verschließbaren Flügelelement (10) so festlegbar ist, dass sie nicht zerstörungsfrei von der Einrichtung (100) mit einem öffenbaren und verschließbaren Flügelelement (102) entfernt werden kann ohne dass die erste Identifikationskennzeichnung unbrauchbar wird.

3. Vorrichtung zur Identifikation und Zustandsüberwachung einer zu überwachenden Einrichtung mit einem öffenbaren und verschließbaren Flügelelement (100) nach Anspruch 1 oder 2, **dadurch gekennzeichnet, dass** das Gehäusezweitteil (4) lösbar an der Gehäusebasis (3) oder der Einrichtung mit einem öffenbaren und verschließbaren Flügelelement festgelegt ist.

4. Vorrichtung zur Identifikation und Zustandsüberwachung einer zu überwachenden Einrichtung mit einem öffenbaren und verschließbaren Flügelelement (100) nach Anspruch 3, **dadurch gekennzeichnet, dass** das Gehäusezweitteil (4) lösbar an der Gehäusebasis (3) oder der Einrichtung mit einem öffenbaren und verschließbaren Flügelelement festgelegt ist, wobei aber beim Lösen des Gehäusezweitteils die zweite Identifikationskennzeichnung unbrauchbar wird.

5. Vorrichtung (1) zur Identifikation und Zustandsüberwachung einer zu überwachenden Einrichtung mit einem öffenbaren und verschließbaren Flügelelement (100) nach einem oder mehreren der vorstehenden Ansprüche, **dadurch gekennzeichnet, dass** die erste Identifikationskennzeichnung ein NFC und/oder RFID-Tag (7) aufweist und/oder einen QR-Code (8) zur Identifikation der Einrichtung mit einem öffenbaren und verschließbaren Flügelelement.

6. Vorrichtung (1) zur Identifikation und Zustandsüberwachung einer zu überwachenden Einrichtung mit einem öffenbaren und verschließbaren Flügelelement (100) nach einem oder mehreren der vorstehenden Ansprüche, **dadurch gekennzeichnet, dass** die zweite Identifikationskennzeichnung ein NFC und/oder RFID-Tag (7) und/oder einen QR-Code (8) zur Identifikation des Gehäusezweitteils aufweist.

7. Vorrichtung (1) zur Identifikation und Zustandsüberwachung einer zu überwachenden Einrichtung mit einem öffenbaren und verschließbaren Flügelelement (100) nach einem oder mehreren der vorstehenden Ansprüche, **dadurch gekennzeichnet, dass** das Gehäusezweitteil zur Übertragung der zweiten Identifikationskennzeichnung per Funk ausgelegt ist.

8. Vorrichtung (1) zur Identifikation und Zustandsüberwachung einer zu überwachenden Einrichtung mit einem öffenbaren und verschließbaren Flügelelement (100) nach einem oder mehreren der vorstehenden Ansprüche, **dadurch gekennzeichnet, dass** die Gehäusebasis (3) und das Gehäusezweitteil (4) zusammen einen Aufnahmeraum - beispielsweise ein Batteriefach (6) - zur Aufnahme der Batterie oder dgl. ausbilden.

9. Vorrichtung (1) zur Identifikation und Zustandsüberwachung einer zu überwachenden Einrichtung mit einem öffenbaren und verschließbaren Flügelelement (100) nach einem oder mehreren der vorstehenden Ansprüche, **dadurch gekennzeichnet, dass** sie eine Elektronikschaltung aufweist und dass diese am Gehäusezweitteil (4) oder am Gehäusebasis (3) angeordnet ist.

10. Vorrichtung (1) zur Identifikation und Zustandsüberwachung einer zu überwachenden Einrichtung mit einem öffenbaren und verschließbaren Flügelelement (100) nach Anspruch 9, **dadurch gekennzeichnet, dass** die Elektronikschaltung eine Datenübertragungseinrichtung (E) aufweist, wobei die Datenübertragungseinrichtung zur drahtlosen DatenÜbertragung ausgelegt ist, insbesondere per WLAN, Wi-Fi, Bluetooth, RFID, LoRa, LPWAN, LoRAWAn, LPN, Niederfrequenz und/oder Funk.

11. Vorrichtung (1) zur Identifikation und Zustandsüberwachung einer zu überwachenden Einrichtung mit einem öffenbaren und verschließbaren Flügelelement (100) nach einem der Ansprüche 9 bis 10, **dadurch gekennzeichnet, dass** die Elektronikschaltung eine Sensorik mit wenigstens einem Sensor aufweist.

12. Vorrichtung (1) zur Identifikation und Zustandsüberwachung einer zu überwachenden Einrichtung mit einem öffenbaren und verschließbaren Flügelelement (100) nach einem oder mehreren der vorstehenden Ansprüche, **dadurch gekennzeichnet, dass** das Gehäusezweitteil (4) mit der Gehäusebasis (3) über korrespondierende Verbindungsmittel, insbesondere lösbare korrespondierende Rastmittel (11, 12), lösbar verbunden ist.

13. Einrichtung mit wenigstens einem öffenbaren und verschließbaren Flügelelement (100) und mit wenigstens einer Vorrichtung nach einem oder mehreren der vorstehenden Ansprüche, wobei die Einrichtung als ein Fenster oder als eine Tür ausgebildet ist und einen Blendrahmen (101) und einen Flügelrahmen (102) aufweist.

14. Einrichtung nach Anspruch 13, **dadurch gekennzeichnet, dass** zwischen dem Blendrahmen (101) und dem Flügelrahmen (102) ein Falzraum (F) ausgebildet ist und dass die Vorrichtung (1) ganz oder im Wesentlichen vollständig in dem Falzraum (F) untergebracht ist.

15. Einrichtung nach Anspruch 14, **dadurch gekennzeichnet, dass** wenigstens ein Funktionselement wie ein Sensor und/oder eine Antenne der Vorrichtung in einen Spalt (G1, G2) ragt/ragen oder durch diesen Spalt ragen, der den Falzraum (F) mit einem der an das Fenster oder die Tür angrenzenden Räume verbindet.

16. Einrichtung nach einem der Ansprüche 13 bis 15, **dadurch gekennzeichnet, dass** - bezogen auf eine Einbausituation in einer Wandöffnung eines Gebäudes - die Vorrichtung in dem Bereich des Falzraumes (F) angeordnet ist, der oberhalb der Mitte des eingebauten Flügelrahmens (102) und des eingebauten Blendrahmens (101) liegt, also vorzugsweise zwischen einem oberen horizontalen Flügelrahmenabschnitt und einem oberen horizontalen Blendrahmenabschnitt oder zwischen einem oberen Teil der vertikalen Blend- und Flügelrahmenabschnitte.

17. System zur Zustandsüberwachung, mit zumindest mehreren zu überwachenden Einrichtungen nach einem der Ansprüche 13 bis 16, wobei zumindest ein Teil der Einrichtungen mit zumindest einem öffenbaren und verschließbaren Flügelelement versehen ist, wobei einem Teil oder jeder der Einrichtungen mit einem öffenbaren und verschließbaren Flügelelement eine Vorrichtung (1) zur Identifikation und Zustandsüberwachung der zu überwachenden Einrichtung mit einem öffenbaren und verschließbaren Flügelelement (100) nach einem oder mehreren der Ansprüche 1 bis 12 zugeordnet ist, **dadurch gekennzeichnet, dass** das System ferner folgendes aufweist:
i. wenigstens einen Empfänger (E), um Daten der Vorrichtungen (1) empfangen und auswerten und/oder speichern zu können, so beispielsweise in einer oder mehreren Datenbanken, insbesondere in einer Datencloud (C), und
ii. wenigstens einen Rechner mit einem Auswertungsprogramm zur Analyse der Daten, das vorzugsweise dazu ausgelegt ist, die Daten mit vorgespeicherten Parametern zu vergleichen und/oder zu speichern und das dazu ausgelegt ist, die übertragenden Daten aufgrund der übertragener oder eingegebener Identifikationskennzeichnungen einem korrespondierenden digitalen Zwilling der Einrichtung mit einem öffenbaren und verschließbaren Flügelelement zuzuordnen.

18. Verfahren zum Betreiben eines Systems zur Zustandsüberwachung nach Anspruch 17, das mit zumindest mehreren zu überwachenden Einrichtungen nach einem der Ansprüche 13 bis 16 versehen ist, wobei zumindest ein Teil der Einrichtungen mit zumindest einem öffenbaren und verschließbaren Flügelelement versehen ist, wobei einem Teil oder jeder der Einrichtungen mit einem öffenbaren und verschließbaren Flügelelement eine Vorrichtung (1) zur Identifikation und Zustandsüberwachung der jeweiligen zu überwachenden Einrichtung mit einem öffenbaren und verschließbaren Flügelelement (100) nach einem oder mehreren der Ansprüche 1 bis 12 zugeordnet ist, wobei das System ferner wenigstens einen Empfänger (E) aufweist, wenigstens einen Empfänger (E), um Daten der Vorrichtungen (1) empfangen und auswerten und/oder speichern zu können, so beispielsweise in einer oder mehreren Datenbanken, insbesondere in einer Datencloud (C), und mit wenigstens einen Rechner mit einem Auswertungsprogramm zur Analyse der Daten, wobei das Verfahren auf dem Rechner abläuft und wobei das Verfahren zumindest dazu ausgelegt ist, die Daten mit vorgespeicherten Parametern zu vergleichen und/oder zu speichern und weiter dazu ausgelegt ist, übertragene und/oder eingegebene Daten betreffend zumindest die erste und die zweite Identifikationskennzeichnung einem korrespondierenden digitalen Zwilling der Einrichtung, insbesondere mit einem öffenbaren und verschließbaren Flügelelement zuzuordnen.

## Claims

1. Device (1) for identifying and monitoring the state of an arrangement (100) to be monitored, having an openable and closable wing element (102), wherein the device (1) has a housing (2), which has a housing base (3) which can be fixed to the arrangement (100) or is integrally connected thereto, and has at least one second housing part (4) which can be attached to the housing base and can be removed from the housing base, wherein the device is further provided with an identification marker, wherein the housing base (3) has a first identification marker which is an identification marker of the arrangement to be monitored having an openable and closable wing element, wherein the second housing part has at least a second identification marker which identifies the second housing part.

2. Device for identifying and monitoring the state of an arrangement (100) to be monitored having an openable and closable wing element (100) according to claim 1, **characterized in that** the housing base (3) can be fixed to the arrangement having an openable and closable wing element (100) by means of a connecting device having an openable and closable wing element (10) in such a manner that it cannot be removed in a destruction-free manner from the arrangement (100) having an openable and closable wing element (102) without destroying the first identification marker.

3. Device for identifying and monitoring the state of an arrangement to be monitored having an openable and closable wing element (100) according to claim 1 or 2, **characterized in that** the second housing part (4) is detachably fixed to the housing base (3) or the arrangement having an openable and closable wing element.

4. Device for identifying and monitoring the state of an arrangement to be monitored having an openable and closable wing element (100) according to claim 3, **characterized in that** the second housing part (4) is detachably fixed to the housing base (3) or the arrangement having an openable and closable wing element, but when the second housing part is detached, the second identification marker becomes unusable.

5. Device (1) for identifying and monitoring the state of an arrangement to be monitored having an openable and closable wing element (100) according to one or more of the preceding claims, **characterized in that** the first identification marker comprises an NFC and/or RFID tag (7) and/or a OR code (8) for identification of the arrangement having an openable and closable wing element.

6. Device (1) for identifying and monitoring the state of an arrangement to be monitored having an openable and closable wing element (100) according to one or more of the preceding claims, **characterized in that** the second identification marker comprises an NFC and/or RFID tag (7) and/or a OR code (8) for identification of the second housing part.

7. Device (1) for identifying and monitoring the state of an arrangement to be monitored having an openable and closable wing element (100) according to one or more of the preceding claims, **characterized in that** the second housing part is designed for transmitting the second identification marker by radio.

8. Device (1) for identifying and monitoring the state of an arrangement to be monitored having an openable and closable wing element (100) according to one or more of the preceding claims, **characterized in that** the housing base (3) and the second housing part (4) together form a receiving space - for example a battery compartment (6) - for receiving the battery or the like.

9. Device (1) for identifying and monitoring the state of an arrangement to be monitored having an openable and closable wing element (100) according to one or more of the preceding claims, **characterized in that** it comprises an electronic circuit and **in that** this is arranged on the second housing part (4) or on the housing base (3).

10. Device (1) for identifying and monitoring the state of an arrangement to be monitored having an openable and closable wing element (100) according to claim 9, **characterized in that** the electronic circuit has a data transmission device (E), wherein the data transmission device is designed for wireless data transmission, in particular by WLAN, WIFI, Bluetooth, RFID, LoRa, LPWAN, LoRAWAn, LPN, low frequency and/or radio.

11. Device (1) for identifying and monitoring the state of an arrangement to be monitored having an openable and closable wing element (100) according to one of the claims 9 to 10, **characterized in that** the electronic circuit has a sensor system with at least one sensor.

12. Device (1) for identifying and monitoring the state of an arrangement to be monitored having an openable and closable wing element (100) according to one or more of the preceding claims, **characterized in that** the second housing part (4) is detachably connected to the housing base (3) via corresponding connecting means, in particular detachable corresponding latching means (11, 12).

13. Arrangement comprising at least one openable and closable wing element (100) and comprising at least one device according to one or more of the preceding claims, wherein the device is formed as a window or as a door and comprises a fixed frame (101) and a wing frame (102).

14. Arrangement according to claim 13, **characterized in that** a rebate space (F) is formed between the fixed frame (101) and the wing frame (102), and **in that** the device (1) is housed entirely or substantially entirely in the rebate space (F).

15. Arrangement according to claim 14, **characterized in that** at least one functional element such as a sensor and/or an antenna of the device protrudes/protrudes into or through a gap (G1, G2) connecting the rebate space (F) to one of the spaces adjacent to the window or door.

16. Arrangement according to one of claims 13 to 15, **characterized in that** - with reference to an installation situation in a wall opening of a building - the device is arranged **in that** region of the rebate space (F) which lies above the center of the installed wing frame (102) and the installed fixed frame (101), i.e. preferably between an upper horizontal wing frame section and an upper horizontal fixed frame section or between an upper part of the vertical fixed frame and wing frame sections.

17. System for status monitoring, comprising at least a plurality of arrangements to be monitored according to one of claims 13 to 16, wherein at least a part of the arrangements are provided with at least one openable and closable wing element, wherein associated with a part or each of the arrangements having an openable and closable wing element is a device (1) for identifying and monitoring the state of the arrangement to be monitored having an openable and closable wing element (100) according to one or more of claims 1 to 12, **characterized in that** the system further comprises:
i. at least one receiver (E) for receiving and evaluating and/or storing data from the devices (1), for example in one or more databases, in particular in a data cloud (C), and
ii. at least one computer having an evaluation program for analyzing the data, which is preferably designed to compare and/or store the data with pre-stored parameters and which is designed to assign the transmitting data to a corresponding digital twin of the arrangement having an openable and closable wing element on the basis of the transmitted or entered identification markers.

18. Method for operating a system for status monitoring according to claim 17, which is provided with at least a plurality of arrangements to be monitored according to one of claims 13 to 16, wherein at least a part of the arrangements is provided with at least one openable and closable wing element, wherein a part or each of the arrangements having an openable and closable wing element is associated with a device (1) for identifying and monitoring the state of the respective arrangement to be monitored having an openable and closable wing element (100) according to one or more of claims 1 to 12, wherein the system further comprises at least one receiver (E), at least one receiver (E) in order to be able to receive and evaluate and/or store data of the devices (1), for example in one or more databases, in particular in a data cloud (C), and having at least one computer with an evaluation program for analyzing the data, wherein the method runs on the computer and wherein the method is designed at least to compare and/or store the data with pre-stored parameters and is further designed to assign transmitted and/or input data relating to at least the first and the second identification marker to a corresponding digital twin of the arrangement, in particular having an openable and closable wing element.

## Revendications

1. Dispositif (1) pour l'identification et la surveillance de l'état d'une installation (100) à surveiller munie d'un élément de vantail (102) pouvant être ouvert et fermé, lequel dispositif (1) comporte un boîtier (2) qui possède une base de boîtier (3) et peut être fixé sur l'installation (100) et assemblé d'un seul tenant avec celle-ci, et au moins une deuxième partie de boîtier (4) pouvant être posée sur la base de boîtier et enlevée de la base de boîtier, le dispositif étant en outre muni d'un marquage d'identification, la base de boîtier (3) comportant un premier marquage d'identification qui est un marquage d'identification de l'installation munie d'un élément de vantail pouvant être ouvert et fermé à surveiller, dans lequel la deuxième partie de boîtier présente au moins un deuxième marquage d'identification qui caractérise la deuxième partie de boîtier.

2. Dispositif pour l'identification et la surveillance de l'état d'une installation à surveiller munie d'un élément de vantail (100) pouvant être ouvert et fermé selon la revendication 1, **caractérisé en ce que** la base de boîtier (3) peut être fixée sur l'installation munie d'un élément de vantail pouvant être ouvert et fermé (100) à l'aide d'une installation d'assemblage (10) à un élément de vantail pouvant être ouvert et fermé de façon à ne pas pouvoir être enlevée sans la détruire de l'installation (100) munie d'un élément de vantail pouvant être ouvert et fermé (102) sans que le premier marquage d'identification devienne inutilisable.

3. Dispositif pour l'identification et la surveillance de l'état d'une installation à surveiller munie d'un élément de vantail (100) pouvant être ouvert et fermé selon la revendication 1 ou 2, **caractérisé en ce que** la deuxième partie de boîtier (4) est fixée de façon amovible sur la base de boîtier (3) ou l'installation munie d'un élément de vantail pouvant être ouvert et fermé.

4. Dispositif pour l'identification et la surveillance de l'état d'une installation à surveiller munie d'un élément de vantail (100) pouvant être ouvert et fermé selon la revendication 3, **caractérisé en ce que** la deuxième partie de boîtier (4) est fixée de façon amovible sur la base de boîtier (3) ou l'installation munie d'un élément de vantail pouvant être ouvert et fermé, mais le deuxième marquage d'identification devient inutilisable quand la deuxième partie de boîtier est défaite.

5. Dispositif (1) pour l'identification et la surveillance de l'état d'une installation à surveiller munie d'un élément de vantail (100) pouvant être ouvert et fermé selon une ou plusieurs des revendications précédentes, **caractérisé en ce que** le premier marquage d'identification est une puce NFC et/ou RFID (7) et/ou un code OR (8) pour l'identification de l'installation munie d'un élément de vantail pouvant être ouvert et fermé.

6. Dispositif (1) pour l'identification et la surveillance de l'état d'une installation à surveiller munie d'un élément de vantail (100) pouvant être ouvert et fermé selon une ou plusieurs des revendications précédentes, **caractérisé en ce que** le deuxième marquage d'identification est une puce NFC et/ou RFID (7) et/ou un code OR (8) pour l'identification de la deuxième partie de boîtier.

7. Dispositif (1) pour l'identification et la surveillance de l'état d'une installation à surveiller munie d'un élément de vantail (100) pouvant être ouvert et fermé selon une ou plusieurs des revendications précédentes, **caractérisé en ce que** la deuxième partie de boîtier est conçue pour transmettre le deuxième marquage d'identification par radio.

8. Dispositif (1) pour l'identification et la surveillance de l'état d'une installation à surveiller munie d'un élément de vantail (100) pouvant être ouvert et fermé selon une ou plusieurs des revendications précédentes, **caractérisé en ce que** la base de boîtier (3) et la deuxième partie de boîtier (4) forment ensemble un logement, par exemple un compartiment à pile (6) destiné à recevoir la pile ou similaire.

9. Dispositif (1) pour l'identification et la surveillance de l'état d'une installation à surveiller munie d'un élément de vantail (100) pouvant être ouvert et fermé selon une ou plusieurs des revendications précédentes, **caractérisé en ce qu'**il comporte un circuit électronique et **en ce que** celui-ci est disposé sur la deuxième partie de boîtier (4) ou sur la base de boîtier (3).

10. Dispositif (1) pour l'identification et la surveillance de l'état d'une installation à surveiller munie d'un élément de vantail (100) pouvant être ouvert et fermé selon la revendication 9, **caractérisé en ce que** le circuit électronique comporte une installation de transmission de données (E), laquelle installation de transmission de données est conçue pour la transmission de données sans fil, en particulier par réseau local sans fil, Wi-Fi, Bluetooth, RFID, LoRa, LPWAN, LoRAWAn, LPN, basse fréquence et/ou radio.

11. Dispositif (1) pour l'identification et la surveillance de l'état d'une installation à surveiller munie d'un élément de vantail (100) pouvant être ouvert et fermé selon l'une des revendications 9 à 10, **caractérisé en ce que** le circuit électronique présente un circuit de détection avec au moins un capteur.

12. Dispositif (1) pour l'identification et la surveillance de l'état d'une installation à surveiller munie d'un élément de vantail (100) pouvant être ouvert et fermé selon une ou plusieurs des revendications précédentes, **caractérisé en ce que** la deuxième partie de boîtier (4) est assemblée de façon amovible avec la base de boîtier (3) par des moyens d'assemblage correspondants, en particulier des moyens d'enclenchement correspondants (11, 12) pouvant être défaits.

13. Installation avec au moins un élément de vantail pouvant être ouvert et fermé (100) et avec au moins un dispositif selon une ou plusieurs des revendications précédentes, laquelle installation est conformée comme une fenêtre ou une porte et comporte un châssis dormant (101) et un châssis de vantail (102).

14. Installation selon la revendication 13, **caractérisée en ce qu'**un espace de feuillure (F) est formé entre le châssis dormant (101) et le châssis de vantail (102) et **en ce que** le dispositif (1) est entièrement ou presque entièrement logé dans l'espace de feuillure (F).

15. Installation selon la revendication 14, **caractérisée en ce qu'**au moins un élément fonctionnel tel qu'un capteur et/ou une antenne du dispositif dépasse dans un espace (G1, G2) ou à travers de cet espace, qui relie l'espace de feuillure (F) à une des pièces limitrophes de la fenêtre ou de la porte.

16. Installation selon l'une des revendications 13 à 15, **caractérisé en ce que**, par rapport à une situation de montage dans une ouverture du mur d'un bâtiment, le dispositif est disposé dans la zone de l'espace de feuillure (F) qui se trouve au-dessus du milieu du châssis de vantail (102) monté et du châssis dormant (101) monté, donc de préférence entre une partie de châssis de vantail horizontale supérieure et une partie de châssis dormant horizontale supérieure ou entre une partie supérieure des parties de châssis de dormant et de vantail verticales.

17. Système pour la surveillance de l'état avec au moins plusieurs installations à surveiller selon l'une des revendications 13 à 16, dans lequel une partie au moins des installations sont pourvues d'au moins un élément de vantail pouvant être ouvert et fermé, une partie ou chacune des installations munies d'un élément de vantail pouvant être ouvert et fermé étant associée à un dispositif (1) pour l'identification et la surveillance de l'état de l'installation à surveiller munie d'un élément de vantail (100) pouvant être ouvert et fermé selon une ou plusieurs des revendications 1 à 12, **caractérisé en ce que** le système comprend en outre :
i. au moins un récepteur (E) pour pouvoir recevoir et analyser et/ou enregistrer des données des dispositifs (1), par exemple dans une ou plusieurs banques de données, en particulier un nuage de données (C), et
ii. au moins un calculateur avec un programme d'analyse pour l'analyse des données, qui est de préférence conçu pour comparer les données avec des paramètres enregistrés au préalable et/ou les enregistrer et qui est conçu pour associer les données transmises du fait des marquages de d'identification transmis ou saisis à une jumelle numérique correspondante de l'installation munie d'un élément de vantail pouvant être ouvert et fermé.

18. Procédé pour faire fonctionner un système de surveillance de l'état selon la revendication 17, qui est muni d'au moins plusieurs des installations à surveiller selon l'une des revendications 13 à 16, dans lequel au moins une partie des installations sont munies d'au moins un élément de vantail pouvant être ouvert et fermé, une partie ou chacune des installations munies d'un élément de vantail pouvant être ouvert ou fermé étant associée à un dispositif (1) pour l'identification et la surveillance de l'état de l'installation à surveiller munie d'un élément de vantail (100) pouvant être ouvert et fermé selon une ou plusieurs des revendications 1 à 12, le système présentant en outre au moins un récepteur (E), au moins un récepteur (E) pour recevoir et analyser et/ou enregistrer les données des dispositif (1), par exemple dans une ou plusieurs banques de données, en particulier dans un nuage de données (C), et avec au moins un calculateur avec un programme d'analyse pour l'analyse des données, lequel procédé est exécuté sur le calculateur et le procédé est conçu au moins pour comparer les données avec des paramètres enregistrés au préalable et/ou les enregistrer et conçu en outre pour associer des données transmises et/ou saisies concernant au moins le premier marquage d'identification et le deuxième à une jumelle numérique correspondante de l'installation, en particulier munie d'un élément de vantail pouvant être ouvert et fermé.
